## Europäisches Patentamt
## European Patent Office
## Office européen des brevets

(19)

(11) Numéro de publication: **0 071 496**
**B1**

# FASCICULE DE BREVET EUROPÉEN

(12)

(45) Date de publication du fascicule du brevet:
23.07.86

(51) Int. Cl.⁴: **A 47 J 43/044,** A 47 J 43/10

(21) Numéro de dépôt: **82401220.7**

(22) Date de dépôt: **30.06.82**

(54) **Appareil pour confectionner les mayonnaises ou émulsions analogues.**

(30) Priorité: **31.07.81 FR 8114917**

(43) Date de publication de la demande:
**09.02.83 Bulletin 83/6**

(45) Mention de la délivrance du brevet:
**23.07.86 Bulletin 86/30**

(84) Etats contractants désignés:
**AT BE CH DE GB IT LI NL**

(56) Documents cité:
**DE-C-619 780**
**FR-A-1 087 875**
**FR-A-1 089 420**
**FR-A-1 092 758**
**FR-A-2 474 853**
**GB-A-777 271**
**US-A-2 932 494**

(73) Titulaire: **SEB S.A., F-21260 Selongey (FR)**

(72) Inventeur: **Daloz, Joanny, 21 Parc du Petit Bois,
F-21120 Is Sur Tille (FR)**

(74) Mandataire: **Bouju, André, Cabinet Bouju 38
avenue de la Grande Armée, F-75017 Paris (FR)**

LIBER, STOCKHOLM 1986

## Description

La présente invention concerne un appareil ménager pour confectionner les mayonnaises ou émulsions alimentaires analogues.

Les émulsions précitées peuvent être préparées à l'aide d'un fouet manuel ou mécanique destiné à battre et brasser les ingrédients.

On sait que dans ces conditions, la réussite de la mayonnaise est incertaine. En particulier, l'huile doit être additionnée aux autres ingrédients (jaune d'oeuf et moutarde), d'une manière sensiblement continue et avec un certain débit, ce qui implique pour l'utilisateur une expérience et une adresse particulières.

Pour remédier à ces inconvénients, on a proposé dans le brevet français 1 089 420 un appareil comprenant une chambre de brassage surmontée d'un réservoir d'huile relié à la chambre de brassage par une communication calibrée. Ainsi, au cours du brassage par une palette rotative montée dans la chambre de brassage, l'huile s'écoule sinon régulièrement, du moins de façon ralentie dans la chambre de brassage et se trouve incorporée dans le mélange à mesure de son écoulement.

Un tel appareil réduit certes les risques d'échec dans la préparation de la mayonnaise. Cependant, il présente l'inconvénient d'être encombrant, la chambre de brassage et le réservoir d'huile ayant nécessairement tous les deux un volume appréciable.

Le but de la présente invention est de remédier a cet inconvénient en réalisant un appareil ménager qui soit particulièrement peu encombrant et permette de confectionner les mayonnaises sans habilité particulière.

L'invention vise ainsi un appareil ménager pour confectionner les mayonnaises ou émulsions analogues, qui comprend une chambre de brassage disposée dans un corps de de l'appareil et dans laquelle est monté un batteur mécanique rotatif, un réservoir à huile surmontant la chambre de brassage dont le fond constitue un séparateur entre la chambre de brassage et le réservoir à huile, une communication calibrée entre le réservoir à huile et la chambre de brassage, et des moyens pour en cours de brassage, faire passer l'huile du réservoir vers la chambre de brassage par la communication calibrée.

Suivant l'invention, cet appareil est caractérisé en cen que le réservoir à huile est également disposé dans le corps de l'appareil et en ce que le séparateur est monté pour coulisser librement dans le corps de l'appareil.

Pour confectionner une mayonnaise à l'aide de l'appareil ci-dessus, on place l'huile en quantité voulue dans le réservoir à huile, tandis que le jaune d'oeuf, les épices, le vinaigre et la moutarde sont rassemblés dans la chambre de brassage. Avant que le brassage commence, le séparateur est dans une position extrême dans laquelle la chambre de brassage est la plus petite possible tandis que le réservoir à huile est le plus grand possible. On met en marche le batteur mécanique, qui commence par mélanger les ingrédients précités contenus dans la chambre de brassage. Les moyens pour faire passer l'huile du réservoir vers la chambre de brassage par la communication calibrée ajoutent petit à petit l'huile à ce mélange. Le mélange brassé, dont le volume augmente progressivement, repousse petit à petit le séparateur coulissant, dans le sens de la diminution de volume du réservoir à huile. Quand la mayonnaise est terminée, le séparateur occupe, ou est proche d'une autre position extrême, dans laquelle le réservoir d'huile est le plus petit possible tandis que la chambre de brassage est la plus grande possible.

Ainsi, l'invention, qui se fonde sur la constatation qu'au cours de la confection d'une mayonnaise, il n'est jamais nécessaire d'avoir simultanément une grande chambre de brassage et un grand réservoir à huile, permet de réaliser un appareil particulièrement compact dans lequel le réservoir et la chambre de brassage n'ont à chaque instant que le volume strictement nécessaire.

D'autres particularités et avantages de l'invention ressortiront encore de la description ci-après.

Aux dessins annexés, donnés à titre d'exemples non limitatifs:

la figure 1 est une vue en coupe axiale de l'appareil pour confectionner la mayonnaise avant la mise en marche du batteur mécanique;

la figure 2 est une vue en élévation latérale du régulateur de débit d'huile de l'appareil de la figure 1;

la figure 3 est une vue de dessus du régulateur de la figure 2; et

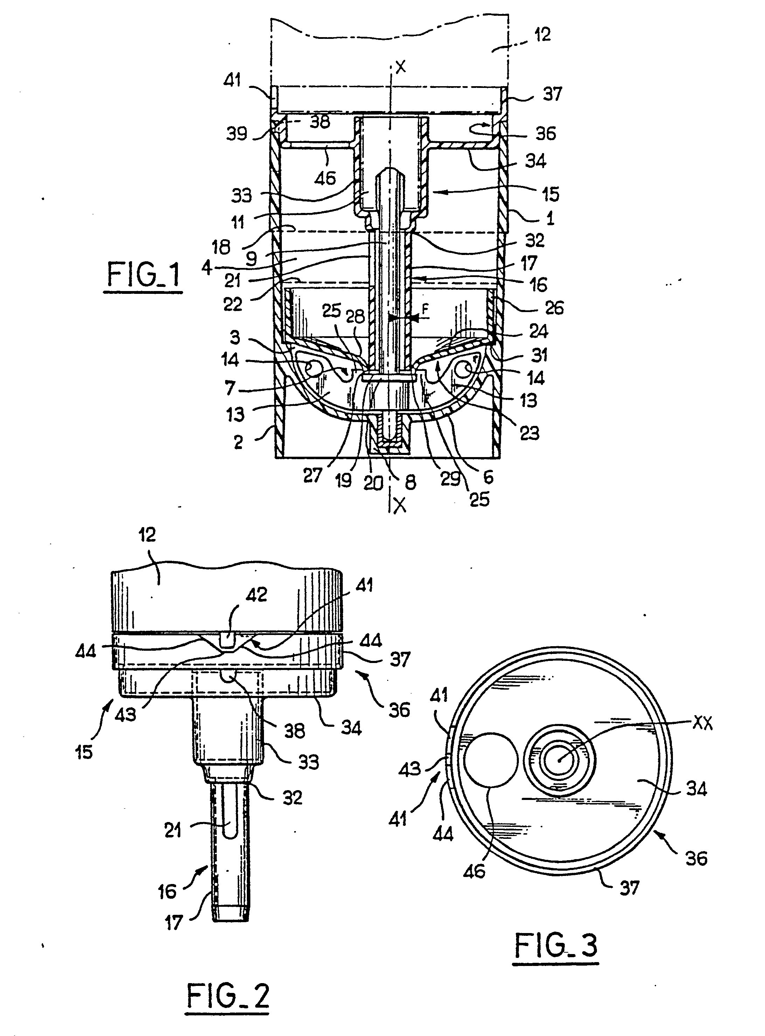

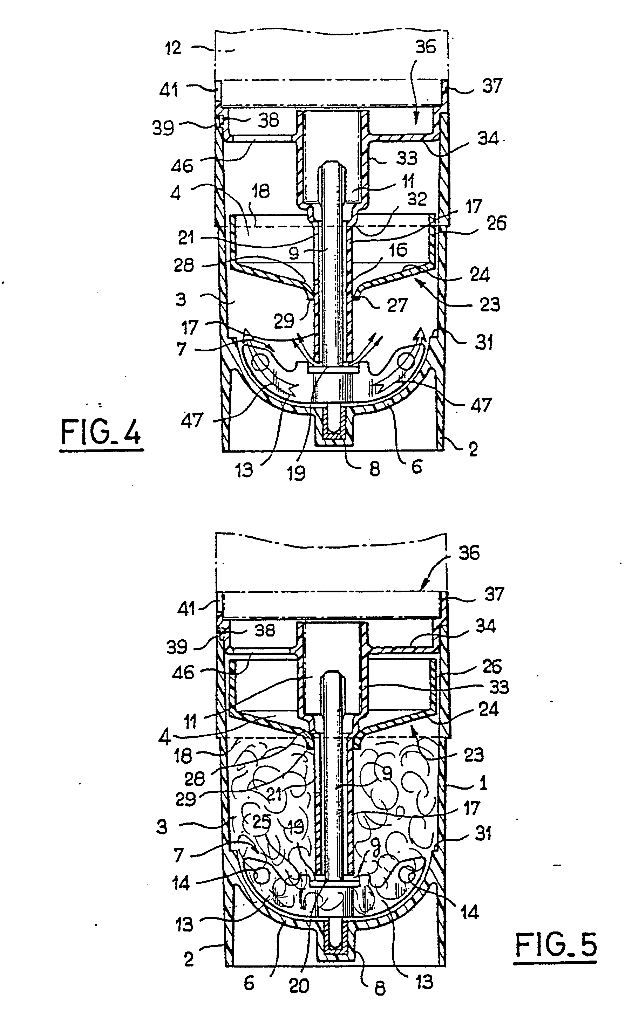

les figures 3 et 5 sont des vues analogues à la figure 1 mais montrant l'appareil en cours et en fin de brassage respectivement.

Comme le montrent les figures 1, 4 et 5, l'appareil comprend un corps 1 de forme générale cylindrique, ce corps étant toutefois légèrement évasé vers le haut pour permettre le démoulage. L'extrémité inférieure du corps 1 forme un socle annulaire 2. Dans le corps 1 sont aménagés une chambre de brassage 3 et au-dessus, un réservoir à huile 4. Vers le bas, la chambre de brassage 3 est limitée par un fond 6 qui présente une concavité dirigée vers le réservoir à huile 4. Dans l'exemple représenté, le fond 6 est un bol sensiblement hémisphérique. Dans la chambre de brassage 3, un batteur mécanique 7 est monté en rotation autour de l'axe X—X de l'appareil, au moyen d'un palier borgne 8 aménagé au centre du bol 6, et d'un arbre d'entraînement 9 qui traverse le réservoir à huile 4 et est relié au moyen d'un accouplement démontable 11 à un moteur électrique 12 monté au-dessus de réservoir 4. Le batteur 7 porte deux pales 13 dont la découpe inférieure épouse le profil du bol 6. Au voisinage de leur extrémité, les pales 13 présentent une ouverture 14 favorable à la formation des émulsions.

Le réservoir 4 et la chambre de brassage 3 sont reliés par une communication calibrée 16. Dans l'exemple représenté, la communication 16 est réalisée au moyen d'un régulateur 15 de débit d'huile comprenant un puits 17 traversé par l'arbre d'entraînment 9 du batteur 7 avec un jeu radial calibré *f*. L'extrémité supérieure du puits 17 coïncide avec le niveau maximal d'huile 18 dans le réservoir 4. Le puits 17 présente une lumière allongée axialement 21 qui s'étend du niveau maximal d'huile 18 jusqu'à un niveau minimal d'huile 22 dans le réservoir 4, et qui fait communiquer le réservoir 4 avec l'intérieur du puits 17. A son extrémité inférieure, le puits 17 débouche dans la chambre de brassage 3, dans la zone d'aspiration résultant de l'effet centrifuge engendré par le batteur mécanique 7. A cette extrémité, le puits 17 définit avec un épaulement 19 porté par une collerette 20 du batteur 7, un insterstice annulaire calibré *g* (Figure 5). En outre, les pales 13 du batteur 7 portent chacune une ailette 25 (Figure 1) dirigée vers le haut jusqu'au niveau de l'extrémité inférieure du puits 17. La tranche intérieure des ailettes 25 est située à proximité immédiate de l'interstice g.

A titre d'exemples numériques, on peut avoir pour un appareil destiné à confectionner environ 150 g de mayonnaise en une seule opération:

    largeur de la lumière 21: 5 mm
    hauteur de la lumière 21: 20 mm
    jeu radial f: 1,5 mm
    interstice g: 1,4 à 2,2 mm

Conformément à l'invention, le réservoir à huile 4 et la chambre de brassage 3 sont aménagés de part et d'autre d'un séparateur coulissant 23.

Dans l'exemple représenté, le séparateur 23 est une cuve dont le fond 24 est conique de manière à être en pente depuis son pourtour vers l'axe X—X de l'appareil. La cuve 23 comporte également une paroi latérale 26 sensiblement cylindrique, dirigée vers le réservoir 4 et adjacente au corps 1.

Le fond 24 est pourvu en son centre d'un alésage 27 destiné à permettre le coulissement sensiblement étanche de la cuve 23 par rapport au puits 17. Vers le haut, l'alésage 27 s'évase selon un profil courbe 28 pour se raccorder au fond 24 de la cuve 23. A son extrémité dirigée vers le bol 6, l'alésage 27 est terminé par une surface annulaire 29 qui, avant la mise en rotation du batteur 7, est en appui étanche contre l'épaulement 19 du batteur 7, et obture ainsi l'interstice g. Dans cette position, le séparateur 23 est également en appui sensiblement étanche contre un épaulement 31 ménagé sur la paroi interne du corps 1, sensiblement au quart de sa hauteur, à la jonction de cette paroi avec le bol 6, et dirigé vers le réservoir 4.

Au-dessus du puits 17, le régulateur 15 présente un épaulement 32 dirigé vers la chambre de brassage 3 et destiné à servir de butée pour le séparateur 23 en fin de confection de la mayonnaise (figure 5). Au-delà de l'épaulement 32, le régulateur 15 comporte une douille 33 qui recouvre l'accouplement amovible 11. La douille 33 est solidaire d'un couvercle 34 destiné à protéger le moteur 12 contre les projections d'huile. Sur son pourtour, le couvercle 34 porte un rebord double dirigé vers le haut 36, dont la partie inférieure est emboîtée dans le corps 1 tandis que la partie supérieure 37 élargie en gradin est emboîtée autour du moteur 12.

Sur sa face extérieure, la partie inférieure du rebord 36 présente une saillie 38 destinée à coopérer avec un évidement 39 de forme correspondante du corps 1, de façon à immobiliser en rotation le corps 1 par rapport au régulateur 15.

La partie supérieure 37 du rebord 36 présente une encoche 41 dirigée vers le moteur 12 et destinée à recevoir un bouton poussoir 42 monté sur le bord inférieur du moteur 12, et dirigé vers le corps 1. Le bouton 42 commande la mise en marche du moteur 12 lorsqu'il est enfoncé. L'encoche 41 a un fond plat 43 et deux bords inclinés symétriques 44 et est suffisamment profonde pour que le bouton 42 soit en position d'extension maximale lorsqu'il est en face du fond 43.

En face de l'encoche 41, le couvercle 34 est percé d'un orifice de remplissage d'huile 46.

De préférence, le corps 1, le régulateur 15, et le séparateur 23 sont réalisés en matière plastique.

L'appareil qui vient d'être décrit fonctionne de la façon suivante:

Au départ, les cinq constituants essentiels de l'appareil, à savoir, le corps 1, le moteur 12, le regulateur 15, le séparateur 23 et le batteur 7 avec son axe 9, sont désassembles. On place dans le bol 3 les ingrédients de base nécessaires à la fabrication de la mayonnaise, à savoir jaune d'oeuf, moutarde, sel, poivre, vinaigre, épices, ail pilé etc. La contenance du bol 6 est prévue de façon que ces ingrédients le remplissent sensiblement lorsqu'ils sont mis en quantité convenable pour la quantité maximale de mayonnaise que l'appareil permet de réaliser en une seule opération.

On met ensuite le batteur 7 en place dans le palier borgne 8. Les pales du batteur se trouvent ainsi noyées dans les ingrédients de base et en retrait par rapport à l'épaulement 31.

On pose ensuite le séparateur 23 dans le bol 6, avec son alésage 27 dirigé vers le bas, et on le pousse manuellement jusqu'à ce qu'il prenne appui sur l'épaulement 19 du batteur 7 et l'épaulement 31 du corps 1. Ainsi, les ingrédients de base sont enfermés dans la chambre de brassage 3 rendue sensiblement étanche par le séparateur 23.

On met en place le régulateur 15 sur le bol 1, en engageant le puits 17 autour de l'axe 9 et dans l'alésage 27, jusqu'à ce que le rebord 36 soit emboîté dans l'extrémité supérieure du corps 1.

En posant le goulot de la bouteille dans l'encoche 41, on verse l'huile par l'orifice 46, dans le réservoir 4 dont le fond est constitué par le fond conique 24 du séparateur 23. Quelques fuites d'huile peuvent se produire entre le séparateur 23 et l'épaulement 31 ou entre le séparateur 23 et l'épaulement 19 compte tenu du caractère sommaire des moyens d'étanchéité prévus en ces emplacements Toutefois, l'air emprisonné entre le fond 24 du séparateur 23 et les ingrédients lors du remplissage du réservoir 4 réduisent considérablement le passage d'huile jusqu'à pratiquement l'annuler.

On emboîte ensuite le moteur 12 dans le rebord 37 en le couplant à l'arbre 9 au moyen de l'accouplement amovible 11 et en prenant soin que le bouton 42 soit en face de l'encoche 41.

En tenant d'une main le corps 1 et de l'autre main le moteur 12, on fait tourner légèrement le moteur 12 autour de l'axe X—X, dans un sens ou dans l'autre par rapport au corps 1. De ce fait, le bouton 42 (figure 2) rencontre l'un des bords obliques 44 de l'encoche 41, ce qui l'enfonce dans le corps du moteur 12 jusqu'à la position représentée en pointillés à la figure 2. Ceci provoque la mise en marche du moteur en toute sécurité, car si l'on relache le moteur 12 ou le corps 1, ces deux organes reviendront dans leur position angulaire relative initiale, par extension du bouton 42 prenant appui sur le bord incliné 44 de l'encoche 41. Par ailleurs, si le régulateur 15 se déboîte du moteur 12, ceci provoque également l'extension du bouton 42, donc l'arrêt du moteur 12.

Dès la mise en route du moteur 12, les ingrédients contenus dans la chambre de brassage 3 tendent à s'écarter de l'axe X—X sous l'effet de la force centrifuge engendrée par les pales 13.

La forme concave du bol 6 combinée à la force centrifuge s'exerçant sur les ingrédients engendre une poussée 47 qui fait décoller le séparateur 23 des épaulements 19 et 31.

Dès que ce décollage du séparateur 23 a eu lieu, l'interstice g entre le puits 17 et l'épaulement 19 est ouvert, et cet interstice se trouvant dans la zone d'aspiration centrifuge par le batteur 7, l'huile provenant du réservoir 4 est aspirée dans la chambre 3 par la lumière 21, l'interstice cylindrique entre le puits 17 et l'arbre 9, et l'interstice g.

A mesure de son arrivée dans la chambre 3, l'huile est mélangée aux autres ingrédients par le batteur 7. l'émulsion qui commence à se former tend à s'agglutiner dans les ouvertures 14 des pales 13, ce qui ralentit considérablement le moteur lancé de 20 000 à 24 000 t/mn environ jusqu'à la vitesse relativement lente de 3 500 à 4 000 t/mn appropriée pour la confection d'une mayonnaise. Du fait de l'arrivée constante d'huile, le mélange voit son volume augmenter et il repousse de plus en plus haut le séparateur.

Même quand la quantité de mélange dans la chambre 3 devient importante, l'alimentation en huile se poursuit, car l'huile est centrifugée au contact de la collerette 20 tandis que les ailettes 25 empêchent le mélange relativement compact d'obturer l'interstice g, par exemple par capilarité.

Quand il n'y a presque plus d'huile, le séparateur 23 arrive en butée contre l'épaulement 32 du régulateur 15. Grâce à la forme conique du fond 24 et au profil arrondi 28 qui relie ce dernier à l'alésage 27, la petite quantité d'huile restante tend à se rassembler en une rigole annulaire autour du puits 17, ce qui favorise son absorption par le puits 17, et en conséquence, l'utilisation complète de l'huile contenue dans le réservoir 4 à chaque confection de mayonnaise. Cette petite rigole annulaire, de même que l'extrémité supérieure de la lumière 21, se trouvent au-dessous de la ligne de contact entre le profil arrondi 28 du séparateur 23 et l'épaulement 32 de sorte qu'elles sont aspirées sans que de grandes quantités d'air le soient aussi.

A ce stade, on arrête le moteur 12 et on démonte les pièces une à une: le moteur 12, le régulateur 15, le séparateur 23 et le batteur 7. La mayonnaise reste contenue dans le corps 1.

L'appareil conforme à l'invention est particulièrement compact grâce à son séparateur coulissant, et permet en outre de réaliser les mayonnaises de façon particulièrement rapide et sûre. En effet, la mayonnaise en cours de fabrication étant confinée dans une chambre 3 dont le volume est juste suffisant, on évite qu'une certaine quantité du mélange soit projetée sur des parois où il échapperait au brassage. A mesure que le séparateur 23 monte, il est de moins en moins soumis aux forces ascendantes provenant de la centrifugation de mélange, mais cette diminution est compensée par le fait que la quantité d'huile qui pèse sur le séparateur 23 diminue également. Comme la lumière 21 se trouve au voisinage de la surface de l'huile dans le réservoir 4, dont le niveau ne varie pas beaucoup au cours de la confection de la mayonnaise, la pression gravitaire de l'huile, qui aide à son écoulement vers la chambre 3 est sensiblement constante, et comme l'aspiration d'huile par centrifugation l'est également, l'appareil conforme à l'invention assure une alimentation en huile dont la régularité est remarquable. En outre, du fait de l'alimentation en huile par aspiration, la mayonnaise est préparée très rapidement, en 7 à 30 secondes pour une mayonnaise de 150 g environ. On peut encore noter qu' avant le début du brassage la paroi latérale 26 du séparateur 23 est très proche de la parois interne du corps 1 et cette proximité participe à l'étanchéité entre le séparateur 23 et l'épaulement 31. Quand le séparateur 23 a décollé de l'épaulement 31, la paroi 26 est de plus en plus éloignée de la paroi interne du corps 1, à cause du léger évasement du corps 1 nécessaire pour permettre le moulage de ce dernier. Cet effet est très favorable, car une fois que le séparateur 23 a décollé, l'aspiration par l'interstice g devient prépondérente et l'étanchéité autour du séparateur 23 a moins d'importance. Il est au contraire préférable qu'un film d'huile s'interpose entre la parois 26 et le corps 1 por permettre son bon coulissement.

On pourrait prévoir que l'alimentation en huile s'effectue uniquement par gravité à partir du réservoir, ou encore que le coulissement du séparateur 23 vers le réservoir 4 en cours de brassage, ne soit provoqué que par l'augmentation du volume du mélange brassé, sans chercher à favoriser ce coulissement, en exploitant la force centrifuge. Comme le montre la figure 5, quand le séparateur 23 atteint sa position extrême supérieure, l'alésage 27 chevauche la lumière 21, de sorte qu'on pourrait craindre que l'alimentation en huile s'effectue par la lumière 21 seulement, celle-ci reliant alors directement le réservoir 4 à la chambre 3. Ceci aurait pour inconvénient de donner un aspect gras à la surface de la mayonnaise confectionnée. Dans la pratique, cette alimentation directe en huile est peu active car l'aspiration à partir de l'interstice $g$ est intense. On pourrait toutefois éviter totalement cette alimentation directe, en remplaçant la lumière 21 par deux lumières superposées, de sorte que lorsque le séparateur 23 est en position haute, l'une de ces lumières soit au-dessus de l'alésage 27 et l'autre en dessous.

Par ailleurs, si l'on craint que le double appui du séparateur 23 sur les épaulements 19 et 31 soit difficile à réaliser en pratique, on peut prévoir un léger jeu entre le séparateur au repos et l'épaulement 19, par exemple 0,15 à 0,4 mm. La fuite d'huile qui en résulte avant la mise en route du batteur mécanique est sans incidence sur la qualité de la mayonnaise.

## Revendications

1. Appareil ménager pour confectionner les mayonnaises ou émulsions analogues, comprenant une chambre de brassage (3) disposée dans un corps (1) de l'appareil et dans laquelle est monté un batteur mécanique rotatif (7), un réservoir à huile (4) surmontant la chambre de brassage (3) et dont le fond constitue un séparateur (23) entre la chambre de brassage (3) et le réservoir à huile (4), une communication calibrée (21, $f$, $g$) entre le réservoir à huile (4) et la chambre de brassage (3), et des moyens (g, 19, 25) pour, en cours de brassage, faire passer l'huile du réservoir (4) vers la chambre de brassage (3) par la communication calibrée (21, $f$, $g$) précitée, caractérisé en ce que le réservoir à huile (4) est également disposé dans le corps de l'appareil et en ce que le séparateur (23) est monté pour coulisser librement dans le corps (1) de l'appareil.

2. Appareil conforme à la revendication 1, caractérisé en ce que, au titre des moyens pour, en cours de brassage, faire passer l'huile du réservoir (4) vers la chambre de brassage (3), la communication calibrée débouche, du côte de la chambre de brassage (3), dans la zone d'aspiration résultant de l'effet centrifuge engendré par le batteur mécanique (7).

3. Appareil conforme à la revendication 2, caractérisé en ce que, pour favoriser l'aspiration de l'huile dans la chambre de brassage (3), le batteur porte une surface rotative (19) destinée à être en contact avec l'huile directement à sa sortie de la communication calibrée (g) de manière à favoriser sa centrifugation.

4. Appareil conforme à l'une des revendications 2 ou 3, caractérisé en ce que le batteur (7) porte des ailettes (25) aménagées dans la zone où la communication calibrée (g) débouche dans la chambre (3), de manière à éviter que le mélange en cours de brassage ne s'amasse dans cette zone.

5. Appareil conforme à l'une des revendications 1 à 4, caractérisé en ce que la paroi de la chambre de brassage (3) opposée au séparateur (23) présente une concavité dirigée vers le réservoir à huile (4) destinée à favoriser la conversion de la force centrifuge prenant naissance dans les ingrédients en cours de brassage, en poussée exercée par les ingrédients sur le séparateur (23).

6. Appareil conforme à l'une des revendications 1 à 5, caractérisé en ce que la communication calibrée est réalisée dans un puits (17) communiquant avec le réservoir à huile (4) et avec la chambre de brassage (3), le séparateur (23) étant traversé par le puits (17) et coulissant sur ce dernier.

7. Appareil conforme à la revendication 6, caractérisé en ce qu'entre l'extrémité du puits (17) et un épaulement (19) du batteur (7) est ménagé un interstice calibré ($g$).

8. Appareil conforme à la revendication 7, caractérisé en ce qu'au repos, le séparateur (23) repose contre l'épaulement (19) du batteur (7) et obture ainsi l'interstice calibré ($g$) entre le puits (17) et le batteur (7).

9. Appareil conforme à l'une des revendications 6 à 8, caractérisé en ce qu'en service, le moteur d'entraînement (12) du batteur (7) est situé au-dessus du réservoir (4) et en ce que l'arbre (9) du batteur (7) est monté avec jeu radial ($f$) dans le puits (17).

10. Appareil conforme à l'une des revendications 6 à 8, caractérisé en ce que le puits (17) communique avec le réservoir (4) par une lumière alongée axialement (21) vers le haut à partir du niveau minimal de remplissage d'huile.

11. Appareil conforme à l'une des revendications 6 à 10, caractérisé en ce que le séparateur (23) est une cuve dont la paroi latérale (26) dirigée vers le réservoir (4), est adjacente à la paroi du corps (1), et dont le fond (24) est en pente depuis son pourtour vers l'axe (X—X) de l'appareil.

12. Appareil conforme à la revendication 11, caractérisé en ce que pour son coulissement sur le puits (17), le séparateur (31) présente un alésage (27) s'évasant vers le réservoir (4) selon un profil courbe (28).

## Patentansprüche

1. Haushaltsgerät zur Zubereitung von Mayonnaisen oder ähnlichen Emulsionen, mit einer in einem Gerätekörper (1) angeordneten Rührkammer (3), in der ein mechanisches Drehrührwerk (7) montiert ist, einem über der Rührkammer (3) befindlichen Ölbehälter (4), dessen Boden ein Trennelement (23) zwischen der Rührkammer (3) und dem Ölbehälter (4) bildet, eine geeichte Verbindung (21, f, g) zwischen dem Ölbehälter (4) und der Rührkammer (3) und Mitteln (g, 19, 25) zum Zuführen des Öles aus dem Behälter (4) über die genannte geeichte Verbindung (21, f, g) zur Rührkammer (3) während des Umrührens, dadurch gekennzeichnet, daß auch der Ölbehälter (4) in dem Gerätekörper (1) angeordnet ist und das Trennelement (23) in dem Gerätekörper (1) frei verschiebbar montiert ist.

2. Gerät nach Anspruch 1, dadurch gekennzeichnet, daß als Mittel, die während des Umrührens Öl aus dem Behälter (4) zu der Rührkammer (3) führen, die geeichte Verbindung auf der Seite der Rührkammer (3) in der Ansaugzone mündet, die aus dem Zentrifugaleffekt resultiert, welcher durch das mechanische Rührwerk (7) erzeugt wird.

3. Gerät nach Anspruch 2, dadurch gekennzeichnet, daß zur Unterstützung des Ansaugens von Öl in die Rührkammer (3) das Rührwerk eine rotierende Oberfläche (19) trägt, die dazu bestimmt ist, mit dem Öl direkt bei seinem Austritt aus der geeichten Verbindung (g) in Berührung zu gelangen, um dessen Zentrifugierung zu unterstützen.

4. Gerät nach Anspruch 2 oder 3, dadurch gekennzeichnet, daß das Rührwerk (7) Flügel (25) aufweist, die in der Zone angeordnet sind, wo die geeichte Verbindung (g) in die Kammer (3) einmündet, um zu vermeiden, daß sich das Gemisch während des Umrührens in dieser Zone ansammelt.

5. Gerät nach einem der Ansprüche 1 bis 4, dadurch gekennzeichnet, daß die Wandung der Rührkammer (3), die dem Trennelement (23) gegenüberliegt, zu dem Ölbehälter (4) hin eine konkave Fläche aufweist, die dazu bestimmt ist, die Umsetzung der Zentrifugalkraft, die beim Umrühren der Bestandteile auftritt, in einen Schub, der durch die Bestandteile auf das Trennelement (23) ausgeübt wird, zu unterstützen.

6. Gerät nach einem der Ansprüche 1 bis 5, dadurch gekennzeichnet, daß die geeichte Verbindung in einem Schacht (17) verwirklicht ist, der mit dem Ölbehälter (4) und mit der Rührkammer (3) in Verbindung ist, wobei das Trennelement (23) von diesem Schacht (17) durchquert wird und auf diesem gleitet.

7. Gerät nach Anspruch 6, dadurch gekennzeichnet, daß zwischen dem Ende des Schachtes (17) und einer Schulter (19) des Rührwerks (7) ein geeichter Zwischenraum (g) angeordnet ist.

8. Gerät nach Anspruch 7, dadurch gekennzeichnet, daß im Ruhezustand das Trennelement (3) auf der Schulter (19) des Rührwerks (7) ruht und auf diese Weise den geeichten Zwischenraum (g) zwischen dem Schacht (17) und dem Rührwerk (7) verschließt.

9. Gerät nach einem der Ansprüche 6 bis 8, dadurch gekennzeichnet, daß im Betrieb der Antriebsmotor (12) des Rührwerks (7) oberhalb des Behälters (4) angeordnet ist und daß die Welle (9) des Rührwerks (7) mit radialem Spiel (f) in dem Schacht (17) montiert ist.

10. Gerät nach einem der Ansprüche 6 bis 8, dadurch gekennzeichnet, daß der Schacht (17) mit dem Behälter (4) in Verbindung ist über eine Öffnung, die sich in Axialrichtung (21) vom minimalen Öl-Einfüllpegel ausgehend nach oben erstreckt.

11. Gerät nach einem der Ansprüche 6 bis 10, dadurch gekennzeichnet, daß das Trennelement (23) eine Schale ist, deren Seitenwand (26), die dem Behälter (4) zugewandt ist, an die Wandung des Körpers (1) angrenzt und deren Boden (24) von ihrem Umfang bis zur Achse (X—X) des Gerätes geneigt ist.

12. Gerät nach Anspruch 11, dadurch gekennzeichnet, daß das Trennelement (31), damit es auf dem Schacht (17) gleiten kann, eine Bohrung (27) aufweist, die zu dem Behälter (4) hin mit gekrümmtem Profil (28) erweitert ist.

## Claims

1. A household appliance for making mayonnaise or similar emulsions, comprising a mixing chamber (3) disposed in a body (1) of the appliance and in which a rotary mechanical beater (7) is mounted, an oil reservoir (4) surmounting the mixing chamber (3) and the base of which forms a separator (23) between the mixing chamber (3) and the oil reservoir (4), a calibrated communication (21, f, g) between the oil reservoir (4) and the mixing chamber (3), and means (g, 19, 25) whereby oil can be passed, during mixing, from the reservoir (4) to the mixing chamber (3) via the said calibrated communication (21, f, g), characterised in that the oil reservoir (4) is also disposed in the body of the appliance and in that the separator (23) is mounted to slide freely in the appliance body (1).

2. An appliance according to claim 1, characterised in that the means for passing oil, during mixing, from the reservoir (4) to the mixing chamber (3) comprise the calibrated communication leading, on the mixing chamber side, into the suction zone resulting from the centrifugal effect produced by the mechanical beater (7).

3. An appliance according to claim 2, characterised in that to promote the suction of oil into the mixing chamber (3) the beater has a rotary surface (19) adapted to be in contact with the oil directly on its leaving the calibrated communication (g) so as to promote its centrifugation.

4. An appliance according to claim 2 or 3, characterised in that the beater (7) is provided with vanes (25) arranged in the zone where the calibrated communication (g) leads into the chamber (3) so as to prevent the mixture in the process of mixing from accumulating in that zone.

5. An appliance according to any one of claims 1 to 4, characterised in that the wall of the mixing chamber (3) remote from the separator (23) has a concavity facing towards the oil reservoir (4) in order to promote the conversion of centrifugal force produced in the ingredients during mixing into a thrust exerted by the ingredients on the separator (23).

6. An appliance according to any one of claims 1 to 5, characterised in that the calibrated communication is made in a well (17) communicating with the oil reservoir (4) and with the mixing chamber (3), the separator (23) being traversed by the well (17) and sliding thereon.

7. An appliance according to claim 6, characterised in that a calibrated gap (g) is provided between the end of the well (17) and a shoulder (19) of the beater (7).

8. An appliance according to claim 7, characterised in that in the inoperative state the separator (23) rests against the shoulder (19) of the beater (7) and thus closes the calibrated gap (g) between the well (17) and the beater (7).

9. An appliance according to any one of claims 6 to 8, characterised in that during operation the drive motor (12) of the beater (7) is situated above the reservoir (4) and in that the shaft (9) of the beater (7) is mounted with radial clearance (f) in the well (17).

10. An appliance according to any one of claims 6 to 8, characterised in that the well (17) communicates with the reservoir (4) via a slot which is elongated axially (21) upwardly from the minimum oil filling level.

11. An appliance according to any one of claims 6 to 10, characterised in that the separator (23) is a dish whose side wall (26) facing towards the reservoir (4) is adjacent the wall of the body (1) and whose base (24) slopes from its periphery to the appliance axis (X—X).

12. An appliance according to claim 11, characterised in that to enable it to slide on the well (17) the separator (31) has a bore (27) widening out towards the reservoir (4) with a curved profile (28).

FIG_1

FIG_2

FIG_3

FIG. 4

FIG. 5